## Europäisches Patentamt

## European Patent Office

## Office européen des brevets

(19)

(11) Numéro de publication: **0 134 735**
**B1**

(12) **FASCICULE DE BREVET EUROPÉEN**

(45) Date de publication du fascicule du brevet:
08.04.87

(51) Int. Cl.⁴: **B 60 R 16/02**, H 04 L 11/16

(21) Numéro de dépôt: 84401498.5

(22) Date de dépôt: 17.07.84

(54) **Perfectionnements apportés aux installations pour la commande et/ou le contrôle des consommateurs d'énergie électrique de véhicules.**

(30) Priorité: 20.07.83 FR 8312225

(43) Date de publication de la demande:
20.03.85 Bulletin 85/12

(45) Mention de la délivrance du brevet:
08.04.87 Bulletin 87/15

(84) Etats contractants désignés:
**DE GB IT SE**

(56) Documents cité:
**DE-C-3 211 020**
**US-A-3 804 986**
**US-A-3 891 965**
**US-A-4 176 250**

**REGELUNGSTECHNISCHE PRAXIS, vol. 17, no. 11, novembre 1975, pages 331-340, Münich, DE; H. KÜRNER: "Prozessrechner-Schnittstellen"**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Marouby, Daniel, 9, rue Joseph Bertrand, F-78220 Viroflay (FR)**
Inventeur: **Meuleman, Jean-Jacques, 49, avenue des Pierrots, F-91400 Orsay (FR)**
Inventeur: **Loth, Siri-Yuth, 11, rue Roger Salengro, F-95140 Grages Les Gonesse (FR)**
Inventeur: **Duc, Michel, 10, rue Paul Gauguin, F-91600 Savigny S/Orge (FR)**

(74) Mandataire: **Boivin, Claude, 9, rue Edouard-Charton, F-78000 Versailles (FR)**

EP 0 134 735 B1

## Description

La présente invention concerne les installations pour la commande et/ou le contrôle des consommateurs d'énergie électrique de véhicules marins, terrestres ou aériens et, plus particulièrement, des installations dites multiplexées qui comportent une unité centrale de traitement assurant la gestion des informations et des commandes des organes consommateurs d'énergie, des modules périphériques et des liaisons conductrices assurant le transport des messages et de l'énergie entre l'unité centrale et les modules périphériques.

Les liaisons conductrices comportent un conducteur dénommé "Bus" qui peut être mono ou bidirectionnel et des opérateurs électriques émetteurs et récepteurs. Dans le cas d'un bus bidirectionnel, ces liaisons comprennent au moins deux opérateurs électroniques émetteurs et deux opérateurs électroniques récepteurs.

Le brevet US-A- 3,891,965 et le brevet GB-A- 2 058 418 décrivent des installations de ce genre, les opérateurs émetteurs étant associés à des transistors dans l'installation du brevet anglais.

Mais, dans ces installations connues, les opérateurs émetteur et récepteur ne sont protégés ni contre les courts-circuits (mise au pôle négatif de la batterie), ni contre les mises au pôle positif de cette batterie. Or, dans ces cas, les composants semi-conducteurs des opérateurs électroniques peuvent être détruits.

La présente invention a pour objet des perfectionnements apportés aux installations de commande et de contrôle des consommateurs d'énergie électrique, dans le but de remédier à ces inconvénients.

Par rapport à l'installation connue notamment du brevet GB-A- 2 058 418, l'installation selon l'invention est caractérisée en ce qu'elle comprend des moyens de protection contre une mise accidentelle au réseau de bord du véhicule, alimenté par exemple en 24 volts, et contre les courts-circuits, ces moyens étant constitués pour les opérateurs $OE_1$, $OE_2$...$OE_n$ d'une résistance et d'une diode passante dans le sens allant de l'émetteur du transistor au bus, et pour les opérateurs récepteurs $OR_1$, $OR_2$...$OR_n$ par deux résistances les reliant au bus et au pôle négatif du réseau de bord.

Chacun des opérateurs électroniques récepteurs peut comporter, dans le but d'ajuster le niveau de récepet d'augmenter ainsi l'immunité aux bruits, deux résistances montées en pont à l'entrée d'un comparateur analogique.

On a décrit ci-après, à titre d'exemple non limitatif, un mode de réalisation de l'installation selon l'invention, avec référence au dessin annexé dans lequel:

La Figure 1 est un schéma de l'installation;

La Figure 2 montre de manière détaillée deux opérateurs émetteurs et deux opérateurs récepteurs de l'installation.

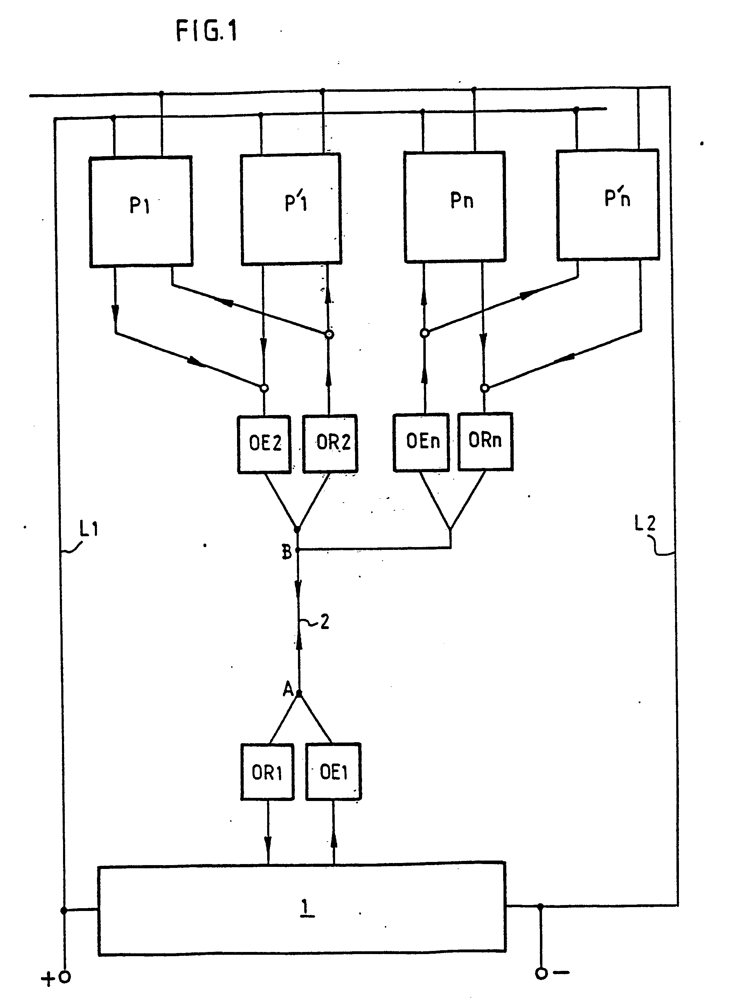

A la Figure 1, on voit une unité centrale 1 qui est connectée à un opérateur électronique émetteur $OE_1$ et à un opérateur électronique récepteur $OR_1$. Ces deux opérateurs sont reliés à une même extrémité A d'un bus bidirectionnel 2 dont l'autre extrémité B est connectée à une série d'opérateurs électroniques émetteurs $OE_2$...$OE_n$ et d'opérateurs électroniques récepteurs $OR_2$... $OR_n$. Des modules périphériques $P_1$, $P'_1$... $P_n$... $P'_n$ sont reliés chacun à un opérateur électronique émetteur et à un opérateur électronique récepteur. L'unité centrale 1 est par ailleurs reliée à chacun des modules périphériques par des conducteurs $L_1$ et $L_2$ assurant le transport de l'énergie à chacun des modules.

Comme cela est connu, si le module $P_1$ doit être commandé, l'unité centrale 1 envoie un signal codé par l'intermédiaire de l'opérateur $OE_1$. Celui-ci est transmis par le bus 2 et l'opérateur $OR_2$ au module $P_1$ qui seul reconnait le signal. Ce module envoie en retour un signal de réception à l'unité centrale 1 par l'intermédiaire de l'opérateur $OE_2$, du bus 2, et de l'opérateur $OR_1$. L'unité centrale envoie alors un ordre de commande au module $P_1$.

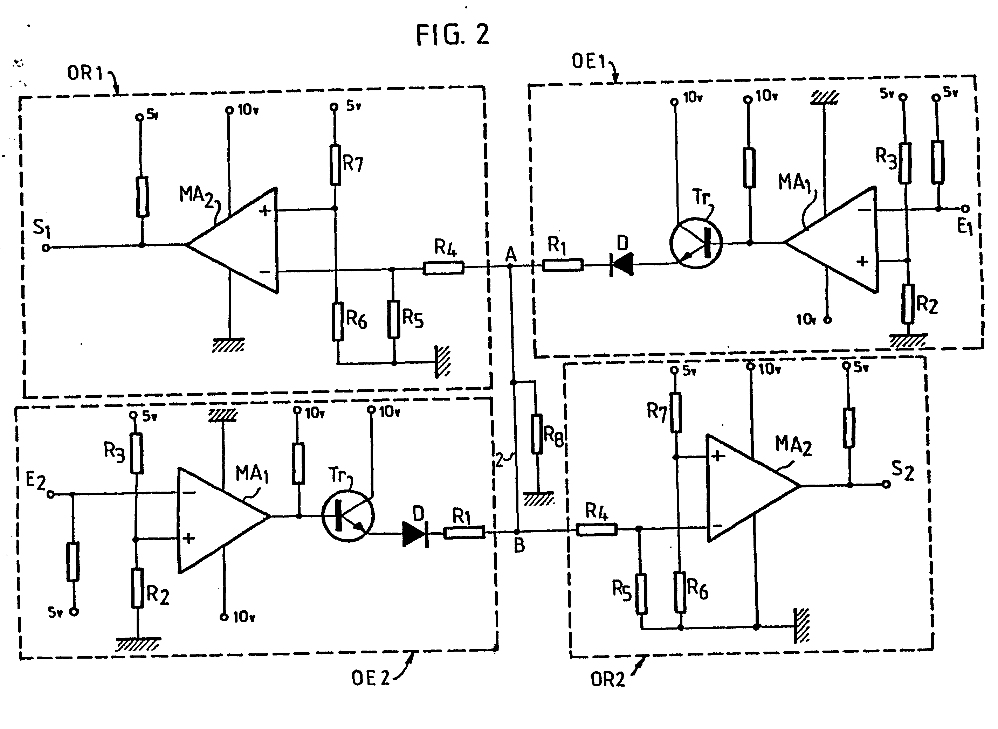

Comme on le voit plus particulièrement à la Figure 2, chacun des opérateurs émetteurs tels que $OE_1$ comporte un transistor $T_r$, du type n-p-n qui est monté en collecteur commun et dont l'émetteur est connecté à l'extrémité correspondante du bus par l'intermédiaire d'une résistance $R_1$ et d'une diode D passante dans le sens allant de l'émetteur au bus. La base du transistor $T_r$ est reliée à la sortie d'un comparateur analogique $MA_1$ dont l'une des entrées est connectée à l'entrée $E_1$ ou $E_2$ des signaux provenant suivant le cas de l'unité centrale 1 ou du module périphérique. L'autre entrée du comparateur est reliée à un diviseur de tension formé des résistances $R_2$ et $R_3$.

De son côté, chacun des opérateurs récepteurs tels que $OR_1$ comprend un comparateur analogique $MA_2$ dont la sortie $S_1$ ou $S_2$ est reliée suivant le cas à l'unité centrale ou au module périphérique. L'une des entrées du comparateur est reliée au bus par l'intermédiaire d'une résistance $R_4$ et à la masse par une résistance $R_5$ alors que son autre entrée est connectée à un diviseur de tension formé des résistances $R_6$ et $R_7$.

Enfin, le bus 2 est connecté à la masse par une résistance $R_8$ de faible valeur, d'une centaine d'ohms.

Le fonctionnement de l'installation est le suivant.

Le signal arrivant par exemple en $E_1$, en provenance de l'unité centrale 1 est comparé à une valeur de pondération fournie par les résistances $R_2$ et $R_3$. Si l'entrée $E_1$ est en l'air ou au 1 logique, la sortie du comparateur est de 0 volt de sorte que le transistor $T_r$ est bloqué et que le signal émis sur le bus est nul.

Si l'entrée $E_1$ est au 0 logique ou à une tension inférieure à la tension d'alimentation V multipliée par le facteur $R_2/(R_2 + R_3)$, la sortie du comparateur est égale à la tension d'alimentation de ce comparateur; le transistor $T_r$ est conducteur et transmet en phase sur le bus le signal qu'il a reçu sur sa base. Le signal émis sur le bus a une tension qui n'est que peu inférieure à la tension d'alimentation.

Le signal provenant du bus 2 entre dans l'opérateur récepteur tel que $OR_1$ par l'intermédiaire du pont résistif $R_4$, $R_5$ et est comparé à la tension fournie par le pont $R_6$, $R_7$. Si le bus 2 est en l'air ou a une tension nulle, la sortie $S_1$ ou $S_2$ du comparateur $MA_2$ est au 1 logique ou à sa tension d'alimentation. Si le bus 2 est à une tension supérieure à la tension d'alimentation V multipliée par le facteur $R_6/(R_6 + R_7)$, la sortie du comparateur est au 0 logique ou égale à 0 volt.

La mise à la masse de l'un des points A ou B du bus 2 provoque la mise à la masse du bus et, par suite, celle des émetteurs des transistors $T_r$ par l'intermédiaire des diodes D et des résistances $R_1$ qui limitent le courant dans les transistors.

La protection contre la mise au plus du bus 2 est assurée par les diodes D qui empêchent l'émetteur des transistors d'être porté au plus.

Dans les deux cas, les résistances $R_4$ et $R_5$ protègent les entrées des comparateurs des opérateurs récepteurs.

Le bus 2 a une indépendance pratiquement constante, du fait de la faible valeur de la résistance $R_8$. La connexion au bus de plusieurs opérateurs émetteurs ou récepteurs ne modifie donc pas l'indépendance du bus.

## Revendications

1. Installation pour la commande et/ou le contrôle des consommateurs d'énergie électrique de véhicules marins, terrestres ou aériens, qui comporte une unité centrale de traitement (1), des modules périphériques ($P_1$, $P'_1$... $P_n$, $P'_n$) et des liaisons conductrices comprenant un bus bidirectionnel (2) et au moins deux opérateurs électroniques récepteurs ($OR_1$, $OR_2$, $OR_n$) ainsi qu'au moins deux opérateurs émetteurs ($OE_1$, $OE_2$, $OE_n$) associés chacun à un transistor ($T_r$) et caractérisée en ce qu'elle comprend des moyens de protection contre une mise accidentelle au réseau de bord du véhicule, alimenté par exemple en 24 volts, et contre les courts-circuits, ces moyens étant constitués pour les opérateurs émetteurs ($OE_1$, $OE_2$... $OE_n$) d'une résistance ($R_1$) et d'une diode (D) passante dans le sens allant de l'émetteur du transistor ($T_r$) au bus (2), et pour les opérateurs récepteurs ($OR_1$, $OR_2$...$OR_n$) par deux résistances ($R_4$, $R_5$) les reliant au bus (2) et au pôle négatif du réseau de bord.

2. Installation selon la revendication 1, caractérisée en ce que dans le but d'ajuster le niveau de réception et d'augmenter l'immunité aux bruits des opérateurs récepteurs ($OR_1$, $OR_2$...$OR_n$) deux résistances ($R_6$, $R_7$) sont montées en pont à l'entrée d'un comparateur analogique ($MA_2$).

## Patentansprüche

1.) Anlage zum Steuern und/oder Überwachen der Verbraucher von elektrischer Energie in Wasser-, Land- und Luftfahrzeugen, welche eine zentrale Verarbeitungseinheit (1), periphere Module (P1, P'$_1$... P$_n$, P'$_n$) und Verbindungsleitungen mit einer zweiseitig gerichteten Sammelleitung (2) und wenigstens zwei elektronischen Empfangs-Operatoren ($OR_1$, $OR_2$, $OR_n$), wenigstens zwei Sende-Operatoren ($OE_1$, $OE_2$, $OE_n$), die jeweils mit einem Transistor (Tr) vereinigt sind, aufweist und dadurch gekennzeichnet ist, daß sie eine Einrichtung zum Schutz vor einer Störung im beispielsweise mit 24 Volt gespeisten Bordnetz des Fahrzeugs, und vor Kurzschlüssen aufweist, wobei diese Einrichtung für die Sende-Operatoren ($OE_1$, $OE_2$... $OE_n$) aus einem Widerstand ($R_1$) und einer Diode (D) mit der Durchlaßrichtung, die vom Sender mit dem Transistor (Tr) zur Sammelleitung (2) führt, und für die Empfangs-Operatoren ($OR_1$, $OR_2$... $OR_n$) aus zwei diese mit der Sammelleitung (2) und dem Minuspol des Bordnetzes verbindenden Widerständen ($R_4$, $R_5$) besteht.

2.) Anlage nach Anspruch 1, dadurch gekennzeichnet, daß in der Absicht, das Empfangsniveau abzustimmen und die Abschirmung gegen Lärm der Empfangs-Operatoren ($OR_1$, $OR_2$... $OR_n$) zu erhöhen, zwei Widerstände ($R_6$, $R_7$) am Eingang eines Analog Komparators ($MA_2$) in Brückenschaltung angebracht sind.

## Claims

1. Installation for controlling and/or monitoring the electric energy consumers on sea, land or air vehicles, which includes a central processing unit (1), peripheral modules ($P_1$ $P'_1$...$P_n$ $P'_n$) and conducting connections including a bidirectional boss (2) and at least two electronic receiving operators ($OR_1$, $OR_2$, $OR_n$) as well as at least two transmitting operators ($OE_1$, $OE_2$, $OE_n$) each associated with a transistor ($T_r$) and characterized in that it includes means for protecting against accidental plugging into the on board network of the vehicle, fed for example with 24 volts, and against short circuits, these means being formed tor the transmitting operators ($OE_1$, $OE_2$...$OE_n$) of a resistor ($R_1$) and a diode (D) conducting in the direction going from the emitter of the transistor ($T_r$) to the bus (2), and for the receiving operators ($OR_1$, $OR_2$...$OR_n$) by two resistors ($R_4$, $R_5$) connecting them to the bus (2) and to the negative pole of the on board network.

2. Installation according to claim 1, characterized in that in order to adjust the reception level and to increase the immunity to noise of the receiving operators ($OR_1$, $OR_2$..$OR_n$) two resistors ($R_6$, $R_7$) are mounted as a bridge at the input of an analog comparator ($MA_2$).

# FIG.1

FIG. 2